# EUROPÄISCHE PATENTSCHRIFT

(11) **EP 0 592 863 B1**
(45) Veröffentlichungstag und Bekanntmachung des Hinweises auf die Patenterteilung: **19.02.1997**
(21) Anmeldenummer: 93115643.4
(22) Anmeldetag: 28.09.1993
(51) Int. Cl.: B09B 3/00, B09B 1/00, E02D 3/00

(54) **Verfahren zur in-situ-Bodensanierung mittels des Tiefenrüttelns**
Method for in-situ soil decontamination using deep vibrations
Procédé de décontamination des sols in-situ avec utilisation de vibrations en profondeur

(30) Priorität: 12.10.1992 DE 4234343
(43) Veröffentlichungstag der Anmeldung: 20.04.1994
(73) Patentinhaber: KELLER GRUNDBAU GmbH, D-63067 Offenbach (DE)
(72) Erfinder: Pielsticker, Albert, Dipl.-Ing., D-21279 Appel (DE); Sondermann, Wolfgang, Dipl.-Ing., D-29664 Walsrode (DE)
(74) Vertreter: Zeitler & Dickel

(56) Entgegenhaltungen:
- EP-A- 0 441 169
- DE-A- 4 013 801
- PROSPEKT 10-2D: 'TIEFENRÜTTELVERFAHREN KELLER GRUNDBAU GMBH August 1991

## Beschreibung

Die Erfindung betrifft ein Verfahren zur in-situ-Sanierung von kontaminierten Bereichen gemäß dem Oberbegriff des Anspruchs 1.

Um verunreinigte Bereiche zu dekontaminieren und damit zu sanieren, hat es sich bewährt, in dem betreffenden Bereich bzw. Boden entsprechende Dekontaminationsmittel einzubringen. Diese bestehen entweder aus chemischen Wirkstoffen oder liegen in Form von Mikroorganismen und/oder Nährstoffen vor, die in einer Suspension enthalten sind. Durch die letztgenannten Wirkstoffe werden die im Boden enthaltenen Schadstoffe mikrobiologisch auf natürlichem Weg abgebaut, d.h. also, es werden insbesondere die den größten Anteil der Schadstoffe bildenden Kohlenwasserstoffe in Kohlendioxid und Wasser zersetzt. Insgesamt erbringen dadurch die in den Bodenporenraum eingebrachten Materialien eine Umsetzung, ein Zersetzen oder eine Umwandlung der bestehenden Kontamination.

Bei der Durchführung eines derartigen Sanierungsvorgangs hat sich nun gezeigt, daß aufgrund der stets vorhandenen inhomogenen Verteilung der Schadstoffe Konzentrationsspitzen der Kontamination vorliegen, die nicht zuverlässig abgebaut werden können. Dies beruht im wesentlichen darauf, daß der verunreinigte Boden in der Regel inhomogen aufgebaut ist. Es ist daher schwierig, den direkten Kontakt zwischen Nährstoff, Sauerstoff, Mikroorganismen und Schadstoff an jeder beliebigen Stelle im verunreinigten Boden zu erreichen bzw. zuverlässig und wirksam herzustellen. Probleme entstehen außerdem durch die erwähnte unterschiedliche Konzentration der Verunreinigungen sowie durch die heterogene Zusammensetzung der organischen Schadstoffe im Boden.

Um diese Nachteile zu beseitigen, erfolgt bei einem bekannten Verfahren (DE-PS 38 11 714) das Einbringen des Dekontaminationsmittels in den Boden mittels gezielter Injektionen, um dadurch den kontaminierten Boden mit den Mikroorganismen und Nährstoffen zu versetzen. Die durchgeführten Injektionsmaßnahmen haben jedoch den Nachteil, daß aufgrund der stets inhomogenen Bodenzusammensetzung Begrenzungen in der Anwendung gegeben sind.

Bei einem weiteren bekannten Verfahren (DE-OS 39 27 418) erfolgt vor der Einbringung des Dekontaminationsmittels in den Boden eine Auflockerung des Bodengefüges. Dies wird mittels einer unter hohem Druck eingebrachten Flüssigkeit, somit also auf hydraulischem Weg, durchgeführt. Hierbei dient die unter hohem Druck eingebrachte Flüssigkeit gleichzeitig als Träger- und Transportmedium für das die Schadstoffe abbauende Dekontaminationsmittel. Als nachteilig ist hierbei anzusehen, daß in jedem Fall Rückflußmaterial anfällt, das die kontaminierten Stoffe beinhaltet und entsorgt werden muß. Gegebenenfalls sind sogar zusätzlich erhebliche Arbeitsschutzmaßnahmen erforderlich, die den Sanierungsaufwand weiter vergrößern.

Bei einem weiteren bekannten Verfahren zur biologischen Reinigung von Erdböden (DE-OS 38 11 856) ist vorgesehen, den kontaminierten Boden durch Sprengung mittels in den Boden eingebrachten Sprengstoffs aufzulockern und sodann anschließend die Nährstoffe bzw. die die Schadstoffe abbauenden Mikroorganismen in den Erdboden einzubringen. Auch bei diesem Verfahren ist jedoch keine zuverlässige homogene Verteilung der Schadstoffe erreichbar, so daß Konzentrationsspitzen im Boden nicht abgebaut werden können.

Ferner ist es aus dem Prospekt 10 - 2D: "Tiefenrüttelverfahren" der Keller Grundbau GmbH vom August 1991 bekannt, eine mechanische Bodenaufbereitung mittels eines Schleusenrüttlers durchzuführen, welcher am oberen Ende eine Einfüllvorrichtung (Schleuse) und einen Vorratsbehälter für Einbaumaterial aufweist.

Schließlich sieht ein bekanntes Verfahren der gattungsgemäßen Art (DE-OS 40 03 362) vor, die homogene Aufbereitung des kontaminierten Bereichs mittels mechanischer Energie durchzuführen, die mit Hilfe eines entsprechend ausgebildeten Aufbereitungsgerätes, das als kombiniertes Schneid- und Rührgerät ausgestaltet ist und an seinem unteren Ende Schneid- und Mischflügel aufweist, in den Boden eingebracht wird. Wenn der kontaminierte Bereich dann durch das Schneid- und Rührgerät in der erwünschten Weise bearbeitet ist, wird die mit den Mikroorganismen und/oder Nährstoffen versetzte Suspension in den Boden eingeführt, die dann mit dem Abbauvorgang beginnen. Jedoch sind auch bei diesem bekannten Verfahren aufgrund von Bodenzusammensetzung und Lagerungsdichte Behandlungsgrenzen gesetzt.

Der Erfindung liegt daher die Aufgabe zugrunde, das gattungsgemäße Verfahren derart auszugestalten, daß es in nahezu allen möglichen Bodenzusammensetzungen, unabhängig von deren bodenmechanischen Parametern, anwendbar ist und völlig ohne Rückflußmaterial, d.h. ohne Überschußmaterial auskommt.

Das Verfahren gemäß der Erfindung löst diese Aufgabe mit den Merkmalen des Anspruchs 1. Vorteilhafte Ausgestaltungen hiervon sind in den Ansprüchen 2 bis 6 angegeben.

Der Erfindung liegt der wesentliche Gedanke zugrunde, die homogene Aufbereitung des kontaminierten Bereichs durch Vibrationsenergie zu erreichen. Diese wird über das in Form eines Tiefenrüttlers ausgebildete Aufbereitungsgerät in den kontaminierten Bereich eingebracht.

Auf diese Weise ist es mit der Erfindung möglich, in zu behandelnden Bodenformationen durch Einbringen von Vibrationsenergie eine dynamische Verflüssigung und intensive Kornumlagerung herbeizuführen.

Wenn nun gleichzeitig oder zeitlich aufeinanderfolgend ein Dekontaminationsmittel zum Zweck der Umwandlung, Zersetzung oder Umsetzung der vorhandenen Kontamination in den Boden eingebracht wird, kann mit Hilfe des erfindungsgemäßen Verfahrens in äußerst wirkungsvoller Weise eine Dekontamination im behandelten Bodenbereich erzielt werden. Hierbei wird durch Einbringen der Rüttelenergie und der damit verbundenen Kornumlagerung bei gleichzeitigem oder kurz darauf folgendem Spülsatz ein intensiver Kontakt der Kontamination mit dem Dekontaminationsmittel erreicht.

Es liegt im Rahmen der Erfindung, daß die mittels des Tiefenrüttelns erfolgende homogene Aufbereitung des kontaminierten Bereichs mehrmals wiederholt wird, bevor das Dekontaminationsmittel zugegeben wird.

Vorteilhafterweise erfolgt die Zugabe des Dekontaminationsmittels über Lanzen, die am Tiefenrüttler mitgeführt werden und somit je nach Wunsch ein gleichzeitig mit dem Tiefenrütteln erfolgendes oder im zeitlichen Abstand hierzu durchgeführtes Einbringen des Dekontaminationsmittels erlauben.

Das erfindungsgemäße Verfahren erbringt insgesamt den wesentlichen Vorteil, daß keinerlei Überschußmaterial anfällt und daß außerdem keine Reststoffe entsorgt oder deponiert werden müssen.

Die Erfindung wird im folgenden anhand der Zeichnung näher erläutert. Diese zeigt in
- Fig. 1: schematisch einen Tiefenrüttler bei der Durchführung des Verfahrens gemäß der Erfindung und
- Fig. 2: den Tiefenrüttler beim Ziehvorgang.

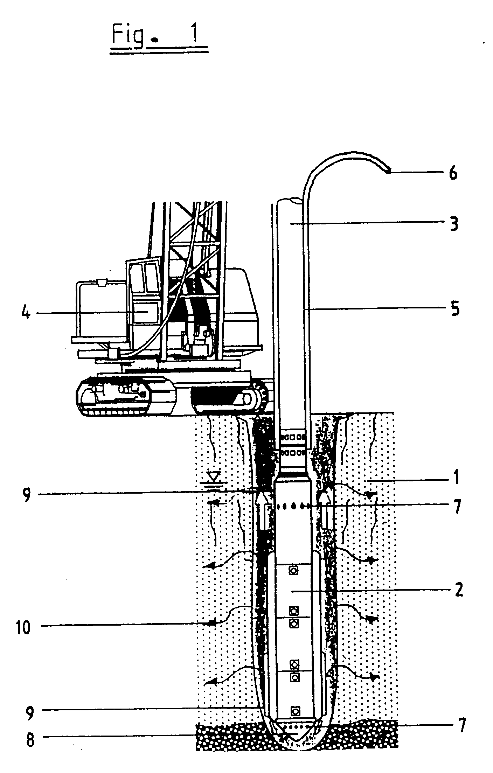

Wie aus Fig. 1 der Zeichnung ersichtlich, wird in den kontamierten Bereich 1 eines zu sanierenden Bodens ein Aufbereitungsgerät in Form eines Tiefenrüttlers 2 eingebracht, um dadurch den kontaminierten Bereich 1 mittels der hierin eingebrachten Vibrationsenergie zu lösen, zu lockern und homogen durchzumischen.

Der Tiefenrüttler 2, der in seinem oberen Bereich ein Rüttlergestänge 3 aufweist, ist in der üblichen Weise mittels eines Rüttlertraggerätes 4 gehaltert.

Am Tiefenrüttler 2 ist eine Zufuhrleitung 5 für Dekontaminationsmittel 6 befestigt, die außen am Rüttlergestänge 3 entlanggeführt ist und am eigentlichen Rüttlerkörper in diesen eintritt. Die Zufuhrleitung 5 weist Austrittsöffnungen 7 auf, die sowohl an der Rüttlerspitze 8 als auch über den Wirkungsbereich 9 des Rüttlers 2 verteilt angeordnet sind. Dadurch ist gewährleistet, daß das zugeführte Dekontaminationsmittel 6 über die gesamte vertikale Erstreckung des kontaminierten Bereichs in diesen eintritt, wie durch die Pfeile 10 angedeutet.

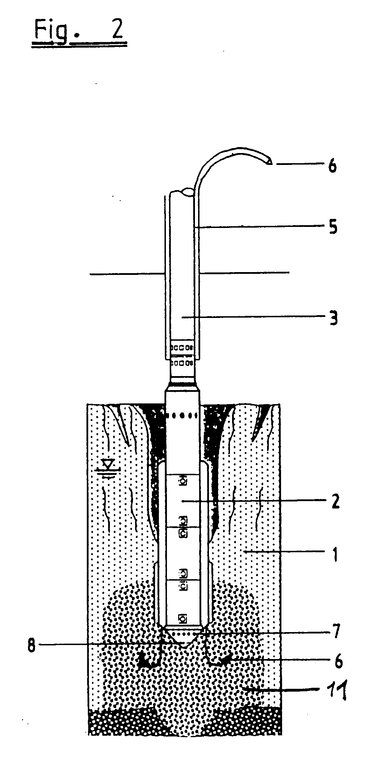

Aus der Darstellung des beschriebenen Verfahrens bzw. der Vorrichtung gemäß Fig. 2 ist deutlich ersichtlich, daß der Rüttler 2 beim Ziehvorgang im zu sanierenden Boden 1 einen Bereich 11 bestimmten Durchmessers ausbildet bzw. zurückläßt, der nicht nur durch den Rüttler 2 gelöst, gelockert und homogen durchmischt ist, sondern auch mit dem an oder nahe der Rüttlerspitze 8 austretenden Dekontaminationsmittel 6 gleichmäßig durchsetzt ist. Demgemäß stellt dieser homogen aufbereitete behandelte Bereich 11 den sanierten Bereich dar, an den sich dann seitlich hierzu der nächste sanierte Bereich 11 anschließt, wenn der Tiefenrüttler 2 den zuvor beschriebenen Arbeitsvorgang erneut durchgeführt hat.

Der jeweils zu erreichende Durchmesser des sanierten Bereichs 11 hängt von der Beschaffenheit des kontaminierten Bodens 1 ab und läßt sich selbstverständlich ohne weiteres mittels an sich bekannter Meß- und Registriergeräte erfassen.

Falls erwünscht und/oder erforderlich, ist es schließlich noch möglich, bei dem sanierten Bereich 11 eine Nachbehandlung mittels des Dekontaminationsmittels 6 durchzuführen. Zu diesem Zweck wird mit dem Tiefenrüttler 2 eine Draineinrichtung, insbesondere in Form eines Rohres oder dgl., in den kontaminierten Bereich 1 eingebracht. Dies erfolgt vorzugsweise vorsorglich bereits zu Beginn der Aufbereitung des kontaminierten Bereichs 1, indem bereits beim erstmaligen Einbringen des Tiefenrüttlers 2 in den kontaminierten Boden 1 die Draineinrichtung mit eingeführt wird.

Hinsichtlich vorstehend nicht im einzelnen beschriebener Merkmale der Erfindung wird im übrigen ausdrücklich auf die Zeichnung sowie auf die Ansprüche verwiesen.

## Patentansprüche

1. Verfahren zur in-situ-Sanierung von kontaminierten Bereichen, insbesondere von natürlichen Böden, künstlichen Auffüllungen, Deponien, Altlasten und dgl., bei dem der zu sanierende Bereich durch ein Aufbereitungsgerät derart bearbeitet wird, daß er wenigstens gelöst, gelockert und homogen durchmischt wird, und bei dem dem homogen aufbereiteten Bereich ein Dekontaminationsmittel zugeführt wird, um die im kontaminierten Bereich enthaltenen Schadstoffe mikrobiologisch und/oder chemisch abzubauen,
**dadurch gekennzeichnet,**
daß die homogene Aufbereitung des kontaminierten Bereichs (1) durch Vibrationsenergie erfolgt, die über das in Form eines Tiefenrüttlers (2) ausgebildete Aufbereitungsgerät in den kontaminierten Bereich eingebracht wird.

2. Verfahren nach Anspruch 1, dadurch gekennzeichnet, daß die mittels des Tiefenrüttelns erfolgende homogene Aufbereitung des kontaminierten Bereichs (1) und die Zugabe des Dekontaminationsmittels (6) gleichzeitig durchgeführt werden.

3. Verfahren nach Anspruch 1, dadurch gekennzeichnet, daß die mittels des Tiefenrüttelns erfolgende homogene Aufbereitung des kontaminierten Bereichs (1) und die Zugabe des Dekontaminationsmittels (6) in zeitlich aufeinanderfolgenden Arbeitsgängen durchgeführt werden.

4. Verfahren nach einem der Ansprüche 1 bis 3, dadurch gekennzeichnet, daß die mittels des Tiefenrüttelns erfolgende homogene Aufbereitung des kontaminierten Bereichs (1) mehrmals wiederholt wird, bevor das Dekontaminationsmittel (6) zugegeben wird.

5. Verfahren nach einem der Ansprüche 1 bis 4, dadurch gekennzeichnet, daß die Zugabe des Dekontaminationsmittels (6) über Lanzen (5) erfolgt, die am Tiefenrüttler (2) mitgeführt werden.

6. Verfahren nach einem der Ansprüche 1 - 5, dadurch gekennzeichnet, daß zur Durchführung einer möglichen späteren Nachbehandlung mittels des Dekontaminationsmittels (6) eine Draineinrichtung, insbesondere in Form eines Rohres oder dgl., mit dem Tiefenrüttler (2) in den kontaminierten Bereich (1) eingebracht wird.

## Claims

1. Process for th*e in situ* reclamation of contaminated areas, in particular of natural soils, artificial backfills, deposits, problem sites and the like, in which the area to be reclaimed is processed by a preparing apparatus in such a way that it is at least separated, loosened and homogeneously intermixed, and in which a decontaminating agent is fed in to the homogeneously prepared area in order to break down microbiologically and/or chemically the noxious substances contained in the contaminated area,
**characterised in that**
the homogeneous preparation of the contaminated area (1) takes place by vibrational energy which is introduced into the contaminated area via the preparing apparatus which is constructed in the form of an immersion vibrator (2).

2. Process according to claim 1, characterised in that the homogeneous preparation of the contaminated area (1), which takes place by means of immersion vibration, and the adding of the decontaminating agent (6) are carried out simultaneously.

3. Process according to claim 1, characterised in that the homogeneous preparation of the contaminated area (1), which takes place by means of immersion vibration, and the adding of the decontaminating agent (6) are carried out in working operations that succeed one another in time.

4. Process according to one of claims 1 to 3, characterised in that the homogeneous preparation of the contaminated area (1), which takes place by means of immersion vibration, is repeated a number of times before the decontaminating agent (6) is added.

5. Process according to one of claims 1 to 4, characterised in that the adding of the decontaminating agent (6) takes place via lances (5) which are guided on the immersion vibrator (2), together with the latter.

6. Process according to one of claims 1 to 5, characterised in that, for the purpose of carrying out a possible later after-treatment by means of the decontaminating agent (6), a draining arrangement, particularly in the form of a tube or the like, is introduced, together with the immersion vibrator (2), into the contaminated area (1).

## Revendications

1. Procédé pour l'assainissement in situ de régions contaminées, en particulier de sols naturels, de remblais artificiels, de décharges, de dépôts anciens et similaires, dans lequel la région à assainir est préparée au moyen d'un appareil de préparation de telle manière qu'elle est au moins détachée, ameublie et mélangée de façon homogène, dans lequel on ajoute un produit de décontamination à la région préparée homogène, afin de dégrader de façon microbiologique et/chimique les produits nocifs contenus dans la région contaminée,
caractérisé en ce que la préparation homogène de la région contaminée (1) a lieu par énergie vibratoire, qui est appliquée dans la région contaminée via l'appareil de préparation réalisé sous la forme d'un appareil de vibration en profondeur (2).

2. Procédé selon la revendication 1, caractérisé en ce que la préparation homogène, qui a lieu au moyen de l'appareil de vibration en profondeur, de la région contaminée (1) et l'addition du produit de décontamination (6) sont effectuées simultanément.

3. Procédé selon la revendication, caractérisé en ce que la préparation homogène, qui a lieu au moyen de l'appareil de vibration en profondeur, de la région contaminée (1) et l'addition du produit de décontamination (6) sont effectuées dans des opérations de travail qui se suivent dans le temps.

4. Procédé selon l'une quelconque des revendications 1 à 3, caractérisé en ce que la préparation, qui a lieu au moyen de l'appareil de vibration en profondeur, de la région contaminée (1) est répétée plusieurs fois, avant de procéder à l'addition du produit de décontamination (6).

5. Procédé selon l'une quelconque des revendications 1 à 4, caractérisé en ce que l'addition du produit de décontamination (6) a lieu au moyen de lances (5) qui sont entraînées conjointement avec l'appareil de vibration en profondeur (2).

6. Procédé selon l'une quelconque des revendications 1 à 5, caractérisé en ce que pour effectuer un traitement postérieur éventuel au moyen du produit de décontamination (6) on met en place dans la région contaminée (1) au moyen de l'appareil de vibration en profondeur (2) un dispositif de drainage, en particulier sous la forme d'un tube ou similaire.
